# EUROPÄISCHE PATENTSCHRIFT

(11) **EP 0 914 269 B1**
(45) Veröffentlichungstag und Bekanntmachung des Hinweises auf die Patenterteilung: **04.12.2002**
(21) Anmeldenummer: 98928059.9
(22) Anmeldetag: 24.03.1998
(51) Int. Cl.: B60S 1/38, B60S 1/40

(54) **WISCHBLATT FÜR SCHEIBEN VON KRAFTFAHRZEUGEN**
WIPER BLADE
BALAI D'ESSUIE-GLACE

(30) Priorität: 02.05.1997 DE 19718490
(43) Veröffentlichungstag der Anmeldung: 12.05.1999
(73) Patentinhaber: ROBERT BOSCH GMBH, 70442 Stuttgart (DE)
(72) Erfinder: KOTLARSKI, Thomas, D-77830 Bühlertal (DE)
(86) Internationale Anmeldenummer: DE9800858
(87) Internationale Veröffentlichungsnummer: WO98050261

(56) Entgegenhaltungen:
- DE-A- 19 627 115
- FR-A- 1 069 875
- FR-A- 2 268 671
- US-A- 5 437 077

## Beschreibung

### Stand der Technik

Bei Wischblättern der im Oberbegriff des Anspruchs 1 bezeichneten Art soll das Tragelement für das gesamte vom Wischblatt bestrichene Wischfeld eine möglichst gleichmäßige Verteilung des vom Wischerarm ausgehenden Wischblatt-Anpreßdrucks an der Scheibe gewährleisten. Durch eine entsprechende Krümmung des unbelasteten Tragelements - also wenn das Wischblatt nicht an der Scheibe anliegt - werden die Enden der im Betrieb des Wischblatts vollständig an der Scheibe angelegten Wischleiste durch das dann gespannte Tragelement zur Scheibe belastet, auch wenn sich die Krümmungsradien von sphärisch gekrümmten Fahrzeugscheiben bei jeder Wischblattposition ändern. Die Krümmung des Wischblatts muß also etwas stärker sein als die im Wischfeld der zu wischenden Scheibe gemessene stärkste Krümmung. Das Tragelement ersetzt somit die aufwendige Tragbügelkonstruktion mit zwei in der Wischleiste angeordneten Federschienen, wie sie bei herkömmlichen Wischblättern praktiziert wird.

Die Erfindung geht aus von einem Wischblatt nach der Gattung des Anspruchs 1. Bei einem bekannten Wischblatt dieser Art

(DE-A-26 14 457) ist die Anschlußvorrichtung einstückig mit dem Tragelement verbunden. Es besteht somit aus demselben Material wie das Tragelement. Dies mag moglicherweise solange von untergeordneter Bedeutung sein, als das Tragelement aus einem Kunststoff hergestellt und dieses deshalb durch Füllen einer entsprechenden Form gefertigt wird. Wenn das Tragelement jedoch aus Metall hergestellt werden soll, stehen sich zwei Forderung diametral gegenüber. Es soll nämlich einmal das Tragelement gute Federeigenschaften aufweisen, andererseits sollen jedoch die Ansätze der Anschlußvorrichtung problemlos aus der Ebene der Tragelements um etwa 90° herausgebogen und in dieser Position fixiert werden, damit die im Betrieb auftretenden Belastungen zwischen Wischblatt und Wischerarm an Anschlagflächen dieser Ansätze aufgenommen werden können. Diese beiden Forderungen können praktisch kaum erfüllt werden, ohne daß man, hinsichtlich der Matetialwahl, nachteilige Kompromisse eingehen muß.

Bei einem anderen bekannten Wischblatt (DE-C-12 47 161) ist das Tragelement mit einer als separates Bauteil ausgebildeten Anschlußvorrichtung versehen. Diese Anschlußvorrichtung ist mit Hilfe von Nieten mit dem Tragelement fest verbunden. Die dazu erforderlichen Bohrungen im Tragelement führen jedoch zu einer unerwünschten, weil unkontrollierbaren Veränderung der Tragelement-Spannung, so daß kein befriedigendes Wischergebnis zu erreichen ist.

### Vorteile der Erfindung

DE-C-12 47 161 zeigt ein Wischblatt der im oberbegriff des Anspruchs 1 bezeichneten Art.

Bei dem gemäß dem Kennzeichen des Anspruchs 1 ausgebildeten Wischblatt dagegen kann sowohl für das Tragelement als auch für die Anschlußvorrichtung eine den Forderungen an das jeweilige Bauteil gerecht werdende Materialwahl getroffen werden. Die Verbindung der beiden Bauteile miteinander erfolgt problemlos und preisgünstig mittels wenigstens einer Schweißverbindung. Weitere Montageschritte können entfallen. Versuche haben ergeben, daß eine Schweißverbindung die Auflagedruckverteilung durch das Tragelement und damit das Wischergebnis nicht oder nur unwesentlich beeinträchtigt.

Wenn das Tragelement und die Anschlußvorrichtung des Wischblatts aus Metall bestehen, kann es zweckmäßig sein, wenn die Schweißverbindung eine Widerstandsschweißung ist.

Insbesondere bei einem Wischblatt, bei dem sowohl das Tragelement als auch die Anschlußvorrichtung aus einem Kunststoff gefertigt sind, kann eine betriebssichere und kostengünstige Befestigung der Anschlußvorrichtung am Tragelement durch eine Ultraschallschweißung erreicht werden.

Die Schweißung selbst kann sowohl bei der Widerstandsschweißung als auch bei der Ultraschallschweißung als vorzugsweise mehrfache Punktschweißung ausgeführt sein.

Bei einem Wischblatt, an welches hinsichtlich der Belastung hohe Ansprüche gestellt werden, kann die Schweißverbindung aber auch durch mehrere linienförmige Schweißstellen realisiert werden, wobei mit Rücksicht auf die einzuhaltenden Vorgaben hinsichtlich der Druckverteilung sich die Schweißstellen quer zur Längsrichtung oder in Längsrichtung des bandförmigen Tragelements erstrecken können.

Eine im Hinblick auf die Wischerarmausgestaltung problemlos anpaßbare Anschlußvorrichtung ergibt sich, wenn diese einen im wesentlichen U-förmigen Querschnitt hat und mit der die beiden U-Schenkel verbindenden U-Basis flächig an der von der Scheibe angewandten Seite des bandartig ausgebildeten Tragelements anliegt.

Als Montagehilfe kann die U-Basis der Anschlußvorrichtung an ihrer von ihren U-Schenkeln abgewandten Seite mit Vorsprüngen versehen sein, welche quer zur Längserstreckung des Tragelements mit einem Abstand voneinander liegen, welcher auf die Breite des Tragelements abgestimmt ist.

Eine besonders gute seitliche Führung und Halterung der beiden miteinander zu verbindenden Bauteile wird erreicht, wenn die Vorsprünge als Leisten ausgebildet sind, die sich in Längsrichtung des Tragelements erstrecken.

Eine weiter verbesserte stabile Halterung der Anschlußvorrichtung an dem Tragelement wird erreicht, wenn an den freien, von der U-Basis abgewandten Enden der Leisten krallenartige, gegeneinander gerichtete Ansätze angeordnet sind, wobei der Abstand zwischen den krallenartigen Ansätzen und der den Schenkeln abgewandten Außenseite der U-Basis auf die Dicke des Tragelements abgestimmt ist.

Zur Positionierung der Anschlußvorrichtung an dem Tragelement in dessen Längsrichtung gesehen, weist die Anschlußvorrichtung wenigstens eine in Längsrichtung des Tragelements weisende Schulter auf, der eine Gegenschulter des Tragelements zugeordnet ist. Es ergibt sich somit eine formschlüssige Positionierungshilfe, die vor dem Schweißvorgang wirksam wird.

Eine absolute Sicherung der Montageposition der Anschlußvorrichtung an dem Tragelement ergibt sich, wenn die Anschlußvorrichtung zumindest zwei nach entgegengesetzten Richtungen weisende Schultern hat, denen jeweils eine Gegenschulter des Tragelements zugeordnet sind.

Zweckmäßig sind die Schultern der Anschlußvorrichtung an einem Vorsprung der Anschlußvorrichtung und die Gegenschultern an einer dem Vorsprung zugeordneten Ausnehmung des Tragelements ausgebildet.

Weitere vorteilhafte Weiterbildungen und Ausgestaltung der Erfindung sind in der nachfolgenden Beschreibung von in der Zeichnung dargestellten Ausführungsformen angegeben.

### Zeichnung

In der Zeichnung zeigen:
- Figur 1: eine Seitenansicht eines erfindungsgemäßen Wischblatts,
- Figur 2: eine Draufsicht auf das Wischblatt gemäß Figur 1,
- Figur 3: eine Ansicht von unten auf ein zum Wischblatt gehörendes, mit einer ersten Ausführungsform der Anschlußvorrichtung versehenes Tragelement in vergrößerter Darstellung,
- Figur 4: einen Schnitt durch die Anordnung gemäß Figur 3, entlang der Linie IV-IV,
- Figur 5: eine Ansicht von unten auf ein zum Wischblatt gehörendes, mit einer zweiten Ausführungsform der Anschlußvorrichtung versehenes Tragelement in vergrößerter Darstellung,
- Figur 6: einen Schnitt durch die Anordnung gemäß Figur 5, entlang der Linie VI-VI,
- Figur 7: eine Ansicht von unten auf ein zum Wischblatt gehörendes, mit einer dritten Ausführungsform der Anschlußvorrichtung versehenes Tragelement in vergrößerter Darstellung und
- Figur 8: einen Schnitt durch die Anordnung gemäß Figur 7, entlang der Linie VIII-VIII.

### Beschreibung der Ausführungsbeispiele

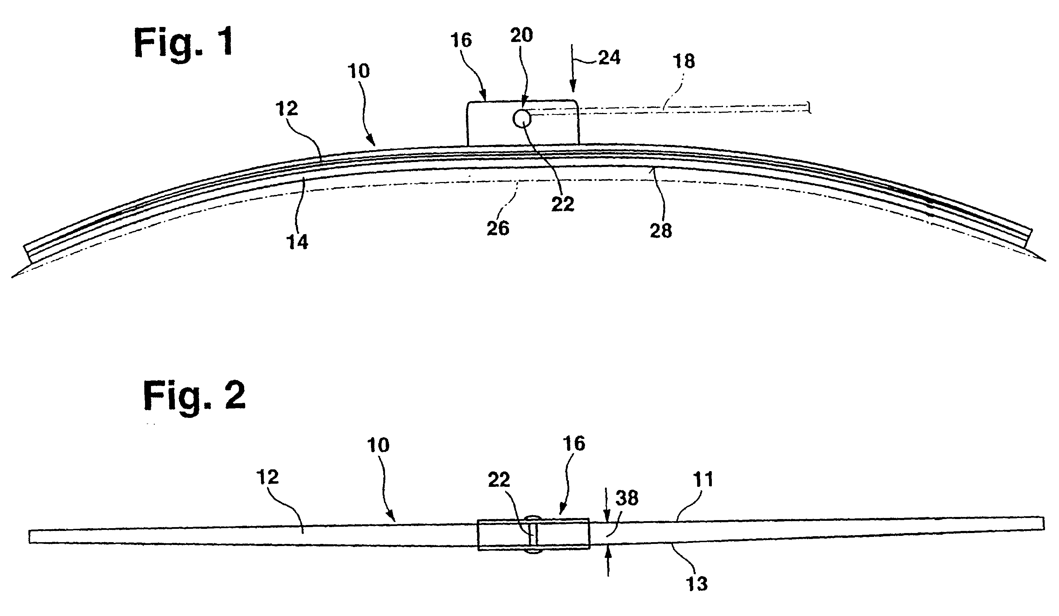

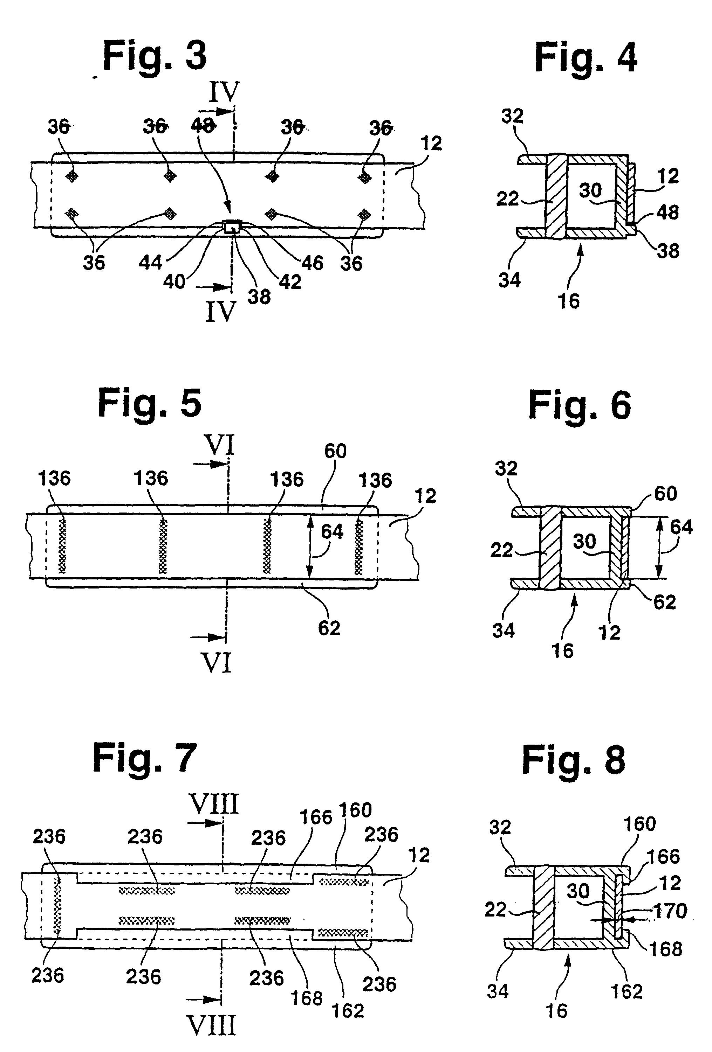

Ein in den Figuren 1 und 2 dargestelltes Wischblatt 10 weist ein langgestrecktes, federelastisches Tragelement 12 auf, an dessen Unterseite eine langgestreckte, gummielastische Wischleiste 14 längsachsenparallel befestigt ist. An der Oberseite des auch als Federschiene zu bezeichnenden Tragelements ist in dessen Mittelabschnitt eine Anschlußvorrichtung 16 angeordnet, mit deren Hilfe das Wischblatt mit einem angetriebenen Wischerarm 18 lösbar verbunden werden kann. An dem freien Ende 20 des Wischerarms 18 ist ein als Gegenanschlußmittel dienender Haken angeformt, welcher einen zur Anschlußvorrichtung 16 des Wischblatts gehörenden Gelenkbolzen 22 umgreift. Die Sicherung zwischen dem Wischerarm 18 und dem Wischblatt 10 wird durch nicht näher dargestellte, an sich bekannte, als Adapter ausgebildete Sicherungsmittel übernommen. Der Wischerarm 18 und damit auch der Haken am Ende 20 ist in Richtung des Pfeiles 24 zur zu wischenden Scheibe belastet, deren zu wischende Oberfläche in Figur 1 durch eine strichpunktierte Linie 26 angedeutet ist. Da die strichpunktierte Linie 26 die stärkste Krümmung der Scheibenoberfläche darstellen soll, ist klar ersichtlich, daß die Krümmung des mit seinen beiden Enden an der Scheibe anliegenden Wischblatts stärker ist als die maximale Scheibenkrümmung. Unter dem Anpreßdruck (Pfeil 24) legt sich das Wischblatt mit seiner Wischlippe 28 über seine gesamte Länge an der Scheibenoberfläche 26 an. Dabei baut sich im federelastischen Tragelement 12 eine Spannung auf, welche für eine ordnungsgemäße Anlage der Wischleiste 14 bzw. deren Wischlippe 28 über deren gesamte Länge an der Scheibe sorgt. Im folgenden soll die Verbindung zwischen dem Tragelement 12 und der Anschlußvorrichtung 16 anhand der Figuren 3 und 4, 5 und 6 sowie 7 und 8 näher erläutert werden.

Bei der in den Figuren 3 und 4 gezeigten ersten Ausführungsform der Erfindung ist die im Querschnitt im wesentlichen U-förmige Anschlußvorrichtung 16 mit der Außenseite ihrer U-Basis 30 flächig an der einen, von der zu wischenden Scheibe abgewandten Oberfläche des bandartigen Tragelements 12 angelegt. Die U-Schenkel 32 und 34 der Anschlußvorrichtung 16 erstrecken sich auf der von dem Tragelement 12 abgewandten Seite der U-Basis 30. In den U-Schenkeln 32 und 34 ist der Gelenkbolzen 22 gelagert. Die Befestigung der Anschlußvorrichtung 16 an dem Tragelement 12 erfolgt mit Hilfe einer Schweißverbindung, auf die später noch näher eingegangen wird.

Als Positionierungshilfe weist die U-Basis 30 der Anschlußvorrichtung von ihrer von den U-Schenkeln 32 und 34 abgewandten Seite einen Vorsprung 38 auf, der - in Längsrichtung des Tragelements 12 - zwei nach entgesetzten Richtungen weistende Schultern 40 und 42 hat. Diesen Schultern 40 und 42 sind jeweils eine Gegenschulter 44 und 46 des Tragelements zugeordnet, die an einer Ausnehmung 48 des Tragelements 12 ausgebildet sind. Da diese Schultern in Längsrichtung des Tragelements weisen, ergibt sich eine formschlüssige Verbindung zwischen dem Tragelement 12 und der Anschlußvorrichtung 16 in Längsrichtung des Tragelements. Dieser Formschluß dient als Positionierungshilfe, wenn die Schweißverbindung erfolgen soll.

Bei dem Ausführungsbeispiel gemäß den Figuren 5 und 6, das eine Fortbildung der Anordnung gemäß den Figuren 3 und 4 darstellt, sind an der von den U-Schenkeln 32 und 34 abgewandten Seite der U-Basis 30 zwei mit Abstand voneinander angeordnete leistenartige Vorsprünge 60 und 62 angeordnet, deren Abstand voneinander auf die Breite 64 des Tragelements 12 abgestimmt ist. Die sich in Längsrichtung des Tragelements 12 erstreckenden leistenartigen Vorsprünge 60 und 62 bilden seitliche Führungen, welche die Position der Anschlußvorrichtung 16 an dem Tragelement 12 quer zu dessen Längserstreckung sichern.

Die Ausführungsform gemäß den Figuren 7 und 8 baut auf der Ausführungsform gemäß den Figuren 5 und 6 auf. Abweichend von dieser Ausführungsform sind zur weiteren Vereinfachung der Vormontage die leistenartigen Vorsprünge 160 und 162 an ihren von der U-Basis 30 abgewandten, freien Enden mit krallenartigen, gegeneinander gerichteten Ansätzen 166 und 168 versehen. Der Abstand zwischen der von den U-Schenkeln 32, 34 abgewandten Außenseite der U-Basis 30 und den dieser zugewandten Seite der Ansätze 166 und 168 ist auf die Dikke 170 des Tragelements 12 abgestimmt. Die Abstimmung ist so getroffen, daß ebenso wie bei der Ausführungsform gemäß den Figuren 5 und 6 eine leichte, jedoch weitgehend spielfreie Relativbewegung zwischen den beiden Bauteilen 12 und 16 möglich ist.

Bei der Ausführungsform gemäß den Figuren 3 und 4 ist dargelegt, daß die Schweißverbindung aus mehreren punktartigen Schweißstellen 36 besteht. Bei der Ausführungsform gemäß den Figuren 5 und 6 weist die Schweißverbindung mehrere linienförmige Schweißstellen 136 auf, deren Längserstreckung quer zur Längsrichtung des Tragelements 12 liegt. Bei der in den Figuren 7 und 8 gezeigten Ausführungsform sind die Schweißstellen 236 ebenfalls linienförmig ausgebildet. Abweichend von der Anordnung gemäß den Figuren 5 und 6 liegen bei dieser Ausführungsform der Erfindung die linienförmigen Schweißstellen 236 in Längsrichtung des Tragelements 12.

In der Praxis hat es sich gezeigt, daß die wenigen Schweißstellen 36 bzw. 136 bzw. 236 für eine betriebssichere Verbindung zwischen dem Tragelement 12 und der Anschlußvorrichtung 116 sorgen. Eine Beeinträchtigung der Federeigenschaften des Tragelements hält sich in so geringen Grenzen, daß sie im Hinblick auf das anzustrebende Wischergebnis praktisch vernachlässigt werden kann. Dabei ist es gleichgültig, ob das Federelement 12 und die Anschlußvorrichtung 16 jeweils aus Metall oder aber auch Kunststoff bestehen. Es ist einleuchtend, daß in diesem Fall auch verschiedenartige Kunststoffe miteinander verbunden werden können, die im Hinblick auf ihre Eigenschaften den an sie gestellten Anforderung Rechnung tragen. Im Falle einer Metallausführung kann eine Widerstandsschweißung zweckmäßig sein, während bei einer Kunststoffausführung eine Ultraschallschweißung Vorteile bringen kann.

Weiter wird darauf hingewiesen, daß die bei der Ausführungsform gemäß den Figuren 3 und 4 geschilderte Formschlußverbindung - Vorsprung 38 mit seinen Schultern 40 und 42 sowie die Ausnehmung 48 mit ihren Gegenschultern 44 und 46 - auch bei den Ausführungsformen gemäß den Figuren 5 und 6 sowie 7 und 8 verwendet werden kann. Weiter ist noch bemerkenswert, daß das bandartige Tragelement 12 bei den Ausführungsbeispielen zwar einteilig ausgebildet ist, doch kann dieses auch aus mehreren Teilen bestehen, ohne daß deshalb der Rahmen der vorliegenden Erfindung verlassen wird.

Auch die Anordnung der Schweißstellen 36, 136 und 236 muß nicht unbedingt so gewählt werden, wie dies in den Figuren 3, 5 und 7 angegeben ist. Vielmehr ist es auch denkbar, diese an den Vorsprüngen 60, 62 bzw. 160, 162 oder an den Ansätzen 166, 168 anzuordnen.

Schließlich ist noch darauf hinzuweisen, daß die Form der Schweißstellen 36 bzw. 136 bzw. 236 unabhängig davon ist, wie die Anschlußvorrichtung 16 ausgebildet ist. Die Anordnung und Formgebung der Schweißstellen ist in den Figuren 3, 5 und 7 lediglich beispielhaft angegeben.

Es ist klar, daß die Gegenschultern 44, 46 - abweichend vom gezeichneten Ausführungsbeispiel - nicht zwingend an einer randoffenen Ausnehmung des Tragelements ausgebildet sein müssen. Mit Rücksicht auf die im Tragelement 12 vorhandene, zur Scheibe 26 gerichtete Arbeitsspannung kann es von Vorteil sein, die Gegenschultern in einem Bereich des Tragelements 12 anzuordnen, der diesbezüglich unsensibel ist. Dies kann beispielsweise auch in dem Bereich des Tragelements 12 geschehen, welcher dem zentralen Bereich Bereich der U-Basis gegenüberliegt. Die Gegenschultern sind dann an einem rundum geschlossenen Durchbruch ausgebildet. Dementsprechend sind dann auch die mit diesen zusammenwirkenden Schultern an der Anschlußvorrichtung zu plazieren.

Weiter ist noch festzuhalten, daß die Anordnung der beschriebenen Positionierungshilfe unabhängig davon anwendbar ist, auf welche Weise die Anschlußvorrichtung mit dem Tragelement verbunden werden soll.

## Patentansprüche

1. Wischblatt (10) für Scheiben von Kraftfahrzeugen mit einer an der zu wischenden Scheibe (26) anlegbaren, langgestreckten, gummielastischen Wischleiste (14), die im wesentlichen längsachsenparallel an einem langgestreckten, federelastischen Tragelement (12) gehalten ist, an dessen von der Scheibe abgewandten Mittelabschnitt eine Anschlußvorrichtung (16) für einen zur Scheibe belastbaren, angetriebenen Wischerarm befestigt ist, wobei die Anschlußvorrichtung (16) als separates Bauteil ausgebildet ist, **dadurch gekennzeichnet, daß** die Anschluß vorrichtung mittels einer Schweißverbindung (36 bzw. 136 bzw. 236) an den Tragelement (12) befestigt ist.

2. Wischblatt nach Anspruch 1, bei dem sowohl das Tragelement als auch die Anschlußvorrichtung aus einem Metall gefertigt sind, **dadurch gekennzeichnet, daß** die Schweißverbindung (36 bzw. 136 bzw. 236) eine Widerstandsschweißung ist.

3. Wischblatt nach Anspruch 1, **dadurch gekennzeichnet, daß** die Schweißverbindung (36 bzw. 136 bzw. 236) eine Ultraschallschweißung ist.

4. Wischblatt nach einem der Ansprüche 1 bis 3, **dadurch gekennzeichnet, daß** die Schweißverbindung mehrere punktartige Schweißstellen (36) aufweist.

5. Wischblatt nach einem der Ansprüche 1 bis 3, **dadurch gekennzeichnet, daß** die Schweißverbindung mehrere linienförmgige Schweißstellen (136 bzw. 236) aufweist.

6. Wischblatt nach Anspruch 5, **dadurch gekennzeichnet, daß** sich die linienförmigen Schweißstellen (136) quer zur Längsrichtung des Tragelements (12) erstrecken.

7. Wischblatt nach Anspruch 5, dadurch gekennezeichnet, daß sich die linienförmigen Schweißstellen (236) in Längsrichtung des Tragelements (12) erstrecken.

8. Wischblatt nach einem der Ansprüche 1 bis 7, **dadurch gekennzeichnet, daß** die Anschlußvorrichtung (16) einen im wesentlichen U-förmigen Querschnitt hat und mit der ihre U-Schenkel (32, 34) verbindenden U-Basis (30) flächig an der von der Scheibe abgewandten Seite des bandartig ausgebildeten Tragelements (12) anliegt.

9. Wischblatt nach Anspruch 8, **dadurch gekennzeichnet, daß** die U-Basis (30) der Anschlußvorrichtung (16) an ihrer von den U-Schenkeln (32, 34) abgewandten Seite mit Vorsprüngen (60, 62) versehen ist, welche quer zur Längserstreckung des Tragelements mit einem Abstand (64) voneinander liegen, welcher auf die Breite des Tragelements abgestimmt ist.

10. Wischblatt nach Anspruch 9, **dadurch gekennzeichnet, daß** die Vorsprünge (60, 62) als Leisten ausgebildet sind, die sich in Längsrichtung des Tragelements (12) erstrecken.

11. Wischblatt nach einem der Ansprüche 8 bis 10, **dadurch gekennzeichnet, daß** an den freien, von U-Basis (30) abgewandten Enden der Leisten (160, 162) krallenartige, gegeneinander gerichtete Ansätze (166, 168) angeordnet sind und daß der Abstand zwischen den krallenartigen Ansätzen (166, 168) und der von den Schenkeln (32, 34) abgewandten Außenseite der U-Basis (30) auf die Dicke (170) des Tragelements (12) abgestimmt ist.

12. Wischblatt nach einem der Ansprüche 8 bis 11, **dadurch gekennzeichnet, daß** an der Anschlußvorrichtung (16) wenigstens eine in Längsrichtung des Tragelements (12) weisende Schulter (40 bzw. 42) angeordnet ist, der eine Gegenschulter (44 bzw. 46) des Tragelements (12) zugeordnet ist.

13. Wischblatt nach Anspruch 12, **dadurch gekennzeichnet, daß** die Anschlußvorrichtung (16) mit zumindest zwei nach entgegengesetzten Richtungen weisenden Schultern (40 und 42) versehen ist, denen jeweils eine Gegenschulter (44 und 46) des Tragelements (12) zugeordnet ist.

14. Wischblatt nach Anspruch 13, **dadurch gekennzeichnet, daß** die Schultern (40 und 42) der Anschlußvorrichtung (16) an einem Vorsprung (38) der Anschlußvorrichtung (16) und die Gegenschultern (44 und 46) an einer dem Vorsprung (38) zugeordneten Ausnehmung (48) des Tragelements (12) ausgebildet sind..

15. Wischblatt nach einem der Ansprüche 9 bis 14, **dadurch gekennzeichnet, daß** die Schweißstellen (36 bzw. 136 bzw. 236) an den Vorsprüngen (60, 62 bzw. 160, 166, 162, 168) angeordnet sind.

## Claims

1. Wiper blade (10) for windows of motor vehicles, having an elongated, elastomeric wiper strip (14) which can be placed against the window (26) and is held essentially parallel to the longitudinal axis on an elongated, resilient supporting element (12) to whose central section, which faces away from the window, is fastened a connecting device (16) for a driven wiper arm which can be loaded towards the window, the connecting device (16) being designed as a separate component, **characterized in that** the connecting device is fastened to the supporting element (12) by means of a weld joint (36 or 136 or 236).

2. Wiper blade according to Claim 1, in which both the supporting element and the connecting device are manufactured from a metal, **characterized in that** the weld joint (36 or 136 or 236) is a resistance weld.

3. Wiper blade according to Claim 1, **characterized in that** the weld joint (36 or 136 or 236) is an ultrasonic weld.

4. Wiper blade according to one of Claims 1 to 3, **characterized in that** the weld joint has a plurality of point-like welding points (36).

5. Wiper blade according to one of Claims 1 to 3, **characterized in that** the weld joint has a plurality of line-shaped welding points (136 or 236).

6. Wiper blade according to Claim 5, **characterized in that** the line-shaped welding points (136) extend transversely to the longitudinal direction of the supporting element (12).

7. Wiper blade according to Claim 5, **characterized in that** the line-shaped welding points (236) extend in the longitudinal direction of the supporting element (12).

8. Wiper blade according to one of Claims 1 to 7, **characterized in that** the connecting device (16) has an essentially U-shaped cross section and with the U-base (30), which connects its U-ends (32, 34), bears in a planar manner against that side of the supporting element (12), which is of band-like design, which faces away from the window.

9. Wiper blade according to Claim 8, **characterized in that** the U-base (30) of the connecting device (16) is provided, on its side facing away from the U-ends (32, 34), with projections (60, 62) which are situated transversely with respect to the longitudinal extent of the supporting element at a distance (64) from one another which is matched to the width of the supporting element.

10. Wiper blade according to Claim 9, **characterized in that** the projections (60, 62) are designed as strips which extend in the longitudinal direction of the supporting element (12).

11. Wiper blade according to one of Claims 8 to 10, **characterized in that** claw-like steps (166, 168) directed towards each other are arranged at the free ends of the strips (160, 162), which ends face away from the U-base (30), and **in that** the distance between the claw-like steps (166, 168) and the outside of the U-base (30), which side faces away from the ends (32, 34) is matched to the thickness (170) of the supporting element (12).

12. Wiper blade according to one of Claims 8 to 11, **characterized in that** at least one shoulder (40 or 42) pointing in the longitudinal direction of the supporting element (12) is arranged on the connecting device (16), the said shoulder being assigned a mating shoulder (44 or 46) of the supporting element (12).

13. Wiper blade according to Claim 12, **characterized in that** the connecting device (16) is provided with at least two shoulders (40 and 42) which point in opposite directions and are in each case assigned a mating shoulder (44 and 46) of the supporting element (12).

14. Wiper blade according to Claim 13, **characterized in that** the shoulders (40 and 42) of the connecting device (16) are formed on a projection (38) of the connecting device (16) and the mating shoulders (44 and 46) are formed on a recess (48) of the supporting element (12), which recess is assigned to the projection (38).

15. Wiper blade according to one of Claims 9 to 14, **characterized in that** the welding points (36 or 136 or 236) are arranged on the projections (60, 62 or 160, 166, 162, 168).

## Revendications

1. Balai d'essuie-glace (10) pour vitres de véhicules automobiles comprenant une lame d'essuie-glace (14) allongée, élastique comme du caoutchouc, qui peut être appliquée sur la vitre (26) à essuyer et qui est montée dans un élément porteur (12) allongé et élastique, sur le milieu duquel est fixé, du côté éloigné de la vitre, un dispositif de raccordement (16) à un bras d'essuyage, entraîné et pouvant être chargé en direction de la vitre, ce dispositif de raccordement (16) étant constitué par un composant séparé,
**caractérisé en ce que**
le dispositif de raccordement est fixé à l'élément porteur (12) par une liaison par soudure (36 ou 136 ou 236).

2. Balai d'essuie-glace selon la revendication 1, dans lequel l'élément porteur et le dispositif de raccordement sont tous deux en métal,
**caractérisé en ce que**
la liaison par soudure (36 ou 136 ou 236) est réalisée par résistance.

3. Balai d'essuie-glace selon la revendication 1,
**caractérisé en ce que**
la liaison par soudure (36 ou 136 ou 236) est réalisée par ultrasons.

4. Balai d'essuie-glace selon une des revendications 1 à 3,
**caractérisé en ce que**
la liaison par soudure est constituée par plusieurs zones de soudure (36) ponctiformes.

5. Balai d'essuie-glace selon une des revendications 1 à 3,
**caractérisé en ce que**
la liaison par soudure est constituée par plusieurs zones de soudure linéaires (136 ou 236).

6. Balai d'essuie-glace selon la revendication 5,
**caractérisé en ce que**
les zones linéaires de soudure (136) sont perpendiculaires à la direction longitudinale de l'élément porteur (12).

7. Balai d'essuie-glace selon la revendication 5,
**caractérisé en ce que**
les zones linéaires de soudure (136) sont parallèles à la direction longitudinale de l'élément porteur (12).

8. Balai d'essuie-glace selon une des revendications 1 à 7,
**caractérisé en ce que**
le dispositif de raccordement (16) a une section essentiellement en forme d'U et il est, par la base (30) de l'U reliant les ailes (32, 34) de l'U, appliqué à plat sur la face de l'élément porteur (12), en forme de barrette, éloignée de la vitre.

9. Balai d'essuie-glace selon la revendication 8,
**caractérisé en ce que**
la base (30) de l'U du dispositif de raccordement (16) porte sur sa face éloignée des ailes (32, 34) de l'U, des saillies (60, 62) perpendiculaires à la direction longitudinale de l'élément porteur et espacées entre elles d'une distance (64) accordée à la largeur de l'élément porteur.

10. Balai d'essuie-glace selon la revendication 9,
**caractérisé en ce que**
les saillies (60, 62) ont la forme de barrettes parallèles à la direction longitudinale de l'élément porteur (12).

11. Balai d'essuie-glace selon une des revendications 8 à 10,
**caractérisé en ce que**
les extrémités libres, éloignées de la base (30) de l'U, des barrettes (160, 162) présentent des appendices (166, 168) du genre griffes, dirigés l'un vers l'autre, et la distance séparant ces appendices de la face externe de la base 30 de l'U éloignées des ailes (32, 34) est accordée à l'épaisseur (170) de l'élément porteur (12).

12. Balai d'essuie-glace selon une des revendications 8 à 11,
**caractérisé en ce que**
l'élément de raccordement (16) présente au moins un épaulement (40, 42) regardant selon la direction longitudinale de l'élément porteur (12) et auquel est associé un contre-épaulement (44, 46) de l'élément porteur (12).

13. Balai d'essuie-glace selon la revendication 12,
**caractérisé en ce que**
le dispositif de raccordement (16) présente, regardant dans deux directions opposées, au moins deux épaulements (40 et 42) auxquels sont associés respectivement des contre-épaulements (44 et 46) de l'élément porteur (12).

14. Balai d'essuie-glace selon la revendication 13,
**caractérisé en ce que**
les épaulements (40 et 42) du dispositif de raccordement (16) sont réalisés sur une saillie (38) portée par ce dispositif, et les contre-épaulements (44 et 46) sont réalisés sur un évidement (48) associé à la saillie (38), pratiqué dans l'élément porteur (12).

15. Balai d'essuie-glace selon la revendication 9 à 14,
**caractérisé en ce que**
les zones de soudure (36 ou 136 ou 236) se trouvent sur les saillies (60, 62 ou 160, 162, 166, 168).
